# EUROPEAN PATENT APPLICATION

(11) **EP 4 444 024 A1**
(43) Date of publication of application: **09.10.2024**
(21) Application number: 24162555.7
(22) Date of filing: 11.03.2024
(51) Int. Cl.: H04W 76/14, H04W 74/08, H04L 1/1812, H04W 76/28, H04L 1/1825

(54) **METHOD AND APPARATUS FOR COMMUNICATING OVER SIDELINKS**

(30) Priority: 06.04.2023 FI 20230025
(71) Applicant: Nokia Technologies Oy, 02610 Espoo (FI)
(72) Inventor: SANCHEZ, Laura Luque, Málaga (ES); ABREU, Renato Barbosa, Aalborg (DK); BUTHLER, Jakob Lindbjerg, Aalborg (DK); KIILERICH PRATAS, Nuno Manuel, Aalborg (DK); JACOBSEN, Thomas Haaning, Nørresundby (DK)
(74) Representative: Nokia EPO representatives

(57) **Abstract**

A method, apparatus, and computer program for determining, by transmitting user equipment, absence of a feedback message from receiving user equipment, which feedback message is related to a transmission of the transmitting user equipment over a sidelink to the receiving user equipment; determining by the transmitting user equipment whether the feedback message is absent from a sidelink physical feedback channel associated with a listen before talk type 2 channel access or with a shared channel occupancy time; and performing a first action that comprises incrementing a discontinuous reception counter associated with the sidelink in response to determining that the feedback message is absent from the sidelink physical feedback channel associated with the listen before talk type 2 channel access or with the shared channel occupancy time.

## Description

### TECHNICAL FIELD

Various example embodiments relate to communicating over sidelinks.

### BACKGROUND

This section illustrates useful background information without admission of any technique described herein representative of the state of the art.

Mobile communications using sidelink operation in unlicensed spectrum is being developed. As the radio resource is unlicensed, there is no single licensed operator to control the use of the radio resource. In result, random collisions occur, and various mechanisms are needed to avoid and overcome collisions.

When using a listen before talk feature, LBT, the user equipment, UE, must pause for a while to listen to other traffic in intended radio channel prior before transmission on that channel. There is a standardized RLAN in which channel occupancy time, COT, is presumed to be available to a transmitting UE, Tx UE, if nothing appears to prevent transmission during that time.

The Tx UE may desire to initiate a transmission and successfully complete a Type 1 listen before talk beforehand and then perform the transmission and acquire the channel occupancy time with duration associated with a corresponding channel access priority class. The acquired channel occupancy time remains even if the initiating device pauses its transmission, although if the initiating device wants to perform a new transmission (within the channel occupancy time) it is still required to perform a "reduced" listen before talk procedure. This "reduced" listen before talk procedure, is commonly known as listen before talk type 2 channel access in 3GPP TS 37.213 version 16.5.0, with the following variants: type 2A (25 µs listen before talk) - for SL transmissions within the initiating device acquired channel occupancy time (in case the gap between two transmissions is ≥ 25 µs); type 2B (16 µs listen before talk) - for transmission within the initiating device acquired channel occupancy time (can only be used for transmissions following another transmission with gap exactly equal to 16 µs); and type 2C (no listen before talk) - can only be used for transmission following another transmission, with a gap < 16 µs and the allowed duration of the transmission ≤ 584 µs).

The Tx UE may inform the receiving UE, Rx UE, of the acquired channel occupancy time via control signalling to the Rx UE about the duration of this channel occupancy time. The Rx UE may use this information to decide which type of listen before talk should apply in a transmission for which the Rx UE is an initiating device. In case the control signalling of the Rx UE transmission falls outside the channel occupancy time, then the Rx UE will have to acquire a new channel occupancy time using the Type 1 listen before talk with an appropriate channel access priority class. Hence, in the type 1 listen before talk, the physical feedback channel may be mapped outside of the channel occupancy time, while in type 2, the feedback channel may be mapped within the channel occupancy time of the Tx UE or another transmitter.

When transmitting data within the channel occupancy time, the Tx UE may employ some acknowledgement mechanism in order to verify whether the data was successfully received. To this end, a hybrid automatic repeat request, HARQ, can be used, wherein the Tx UE receives over a physical sidelink feedback channel ACK or NACK messages from its peer Rx UE, depending on that whether sent data was received correctly or not. However, in the unlicensed radio frequency use for sidelinks, the Rx UE may miss transmissions to the Tx UE for various reasons, and particularly so when the feedback should be sent after the channel occupancy time. The Rx UE may thus not send any ACK or NACK at all, regardless of the state of current radio connectivity. In such cases, the Tx UE may detect that communication with the Rx UE failed and a used sidelink unicast link is considered as unreliable. In return, the Tx UE may increment its numConsecutiveDTX counter that is maintained for each sidelink connection. When that counter hits a set maximum, e.g., sl-maxNumConsecutiveDTX, the Tx UE may erroneously declare to the radio resource controller, RRC. This may cause the Tx UE to release the sidelink connection and avoid maintaining its context as seemingly unusable.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first example aspect, there is provided a method comprising determining, by transmitting user equipment, absence of a feedback message from receiving user equipment, which feedback message is related to a transmission of the transmitting user equipment over a sidelink to the receiving user equipment;
determining, by the transmitting user equipment, whether the feedback message is absent from a sidelink physical feedback channel associated with a listen before talk type 2 channel access or with a shared channel occupancy time; and
performing, by the transmitting user equipment, a first action that comprises incrementing a discontinuous reception counter associated with the sidelink in response to determining that the feedback message is absent from the sidelink physical feedback channel associated with the listen before talk type 2 channel access or with the shared channel occupancy time.

The sidelink may be a sidelink unlicensed, i.e., in an unlicensed radio frequency band.

The first action may further comprise determining that there is no pre-configured behaviour associated with the absence of the feedback message and responsively assuming that the absence of the feedback message indicates a negative acknowledgement.

The first action may further comprise determining according to the pre-configured behaviour that the absence of the feedback message indicates a negative acknowledgement or a positive acknowledgement. The method may further comprise determining, by the transmitting user equipment, whether the sidelink physical feedback channel from which the feedback message is absent is associated with neither any listen before talk type 2 channel access nor with any shared channel occupancy time.

The method may further comprise performing, by the transmitting user equipment, a second action in response to determining that the sidelink physical feedback channel from which the feedback message is absent is associated with neither any listen before talk type 2 channel access nor with any shared channel occupancy time.

The second action may comprise decreasing the discontinuous reception counter.

The second action may comprise re-initialising the discontinuous reception counter.

The second action may comprise maintaining the discontinuous reception counter unchanged.

The second action may comprise determining, by the transmitting user equipment, whether there is a pre-configured behaviour associated with the absence of the feedback message, and
in case that there is no pre-configured behaviour associated with the absence of the feedback message, assuming, by the transmitting user equipment, that the absence of the feedback message indicates a positive acknowledgement; and
in case that there is a pre-configured behaviour associated with the absence of the feedback message, determining, by the transmitting user equipment, according to the pre-configured behaviour that the absence of the feedback message indicates a negative acknowledgement or a positive acknowledgement.

The shared channel occupancy time may comprise a channel occupancy time that is shared by another transmitter with the receiving user equipment and overlapping with the physical feedback channel of the transmitting user equipment.

The shared channel occupancy time may comprise channel occupancy time that is shared by another transmitter with the receiving user equipment and overlapping with the physical feedback channel of the transmitting user equipment and in which the receiving user equipment may transmit.

The method may further comprise determining, by the transmitting user equipment, whether the receiving user equipment can use a shared channel occupancy time.

The method may further comprise performing, by the transmitting user equipment, the first action in response to determining that the receiving user equipment can use the shared channel occupancy time. The method may further comprise determining, by the transmitting user equipment, whether the physical feedback channel can use a short control signalling procedure for transmitting in the physical feedback channel potentially applying a Type 2A listen before talk.

The method may further comprise performing, by the transmitting user equipment, the first action in response to determining that the physical feedback channel can use the short control signalling procedure for transmitting in the physical feedback channel potentially applying the Type 2A listen before talk.

The method may further comprise detecting, by the transmitting user equipment, a consistent listen before talk failure of the receiving user equipment.

The method may further comprise performing, by the transmitting user equipment, the second action in response to detecting that there is a consistent listen before talk failure of the receiving user equipment.

The method may further in the second action, in response to detecting that there is a consistent listen before talk failure of the receiving user equipment, applying, by the transmitting user equipment, a consistent listen before talk failure procedure and accordingly either triggering a radio link failure or not.

The preconfigured behaviour may be based on any one or more of quality of service, a PC5 quality of service indicator, or, channel access priority class. The preconfigured behaviour may be or comprise that if the PC5 quality of service indicator, channel access priority class meets a given threshold then the feedback message is indicative of a positive acknowledgement, otherwise of a negative acknowledgement. Other criteria may be applied, such as any one or more of the following: a signal level, signal-to-interference-plus-noise ratio, reference signal received power, channel busy ratio.

The method may be performed repeatedly by the transmitting user equipment,. The method may be performed, by the transmitting user equipment, for each sidelink physical feedback channel.

The second action may comprise decreasing, by the transmitting user equipment, the discontinuous reception counter, e.g., by re-initialising the discontinuous reception counter or decrementing the discontinuous reception counter. The second action may comprise maintaining the value of the discontinuous reception counter. The method may comprise either decreasing or maintaining the value of the discontinuous reception counter. The choice of decreasing or maintaining the value may be balanced depending on a dynamic guidance received from a cellular operator of the transmitting user equipment. The choice of decreasing or maintaining the value may be balanced depending on a fixed guidance.

The incrementing of the discontinuous reception counter may be subjected to an incrementing condition. The incrementing condition may be based on radio resource control configuration between the transmitting and receiving user equipment of the sidelink, provided by a gNB, based on a predefined specified rule, or configured by higher layers. The incrementing condition may comprise that the sidelink physical feedback channel is associated with a listen before talk type 2C channel access.

According to a second example aspect, there is provided an apparatus comprising at least one processor and at least one memory storing instructions that, when executed by the processor, cause the apparatus to perform the method of the first example aspect.

According to a third example aspect, there is provided an apparatus comprising means for performing the method of the first example aspect.

According to a fourth example aspect, there is provided an apparatus comprising
a first circuitry configured to perform determining, by transmitting user equipment, absence of a feedback message from receiving user equipment, which feedback message is related to a transmission of the transmitting user equipment over a sidelink to the receiving user equipment;
a second circuitry configured to perform determining by the transmitting user equipment whether the feedback message is absent from a sidelink physical feedback channel associated with a listen before talk type 2 channel access or with a shared channel occupancy time; and
a third circuitry configured to perform a first action that comprises incrementing a discontinuous reception counter associated with the sidelink in response to determining that the feedback message is absent from the sidelink physical feedback channel associated with the listen before talk type 2 channel access or with the shared channel occupancy time.

According to a fifth example aspect, there is provided a system comprising the transmitting user equipment of any example aspect. The system may further comprise the receiving user equipment of any example aspect.

According to a sixth example aspect, there is provided a computer program comprising computer executable program instructions configured to cause performing the method of the first example aspect.

The computer program may be stored in a computer readable memory medium.

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

Different non-binding example aspects and embodiments have been illustrated in the foregoing. The embodiments in the foregoing are used merely to explain selected aspects that may be utilized in implementations. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments, reference is now made to the following descriptions taken in connection with the accompanying drawings in which:
Fig. 1 shows an architectural drawing of a system of an example embodiment;
Fig. 2 shows a simple illustration of a shared channel occupancy time, COT, with a feedback channel outside the COT;
Fig. 3 shows another simple illustration of the COT, with a feedback channel within the COT;
Fig. 4 shows a flow chart of a method of an example embodiment;
Fig. 5 shows a simple illustration of another COT;
Figs. 6a to 6d show a schematic flow chart of a method of an example embodiment; and
Fig. 7 shows a block diagram of an apparatus of an example embodiment.

### DETAILED DESCRIPTION

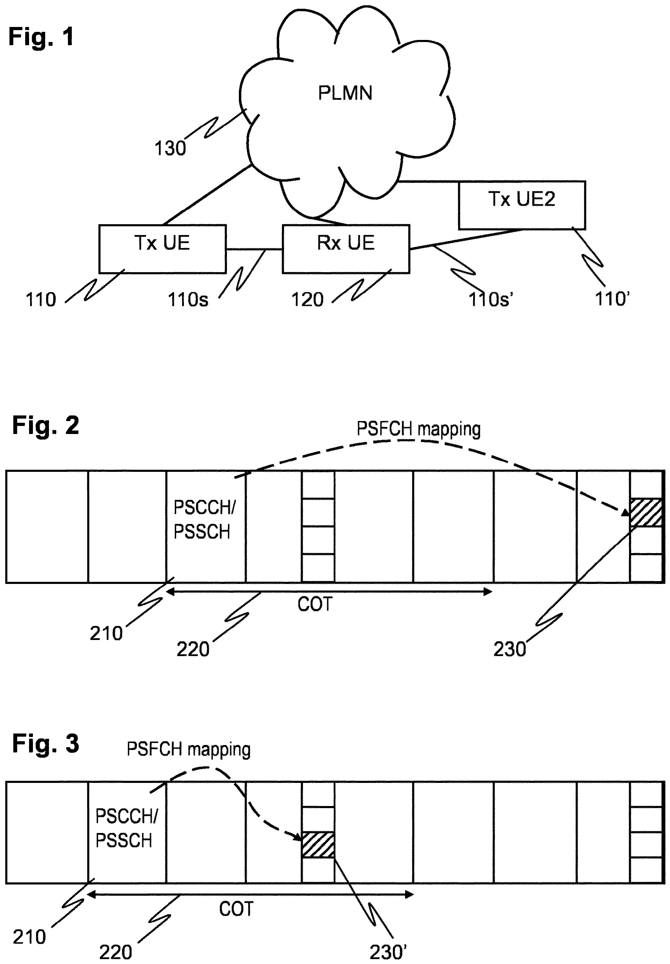

An example embodiment and its potential advantages are understood by referring to Figs. 1 through 7 of the drawings. In this document, like reference signs denote like parts or actions.

Fig. 1 shows an architectural drawing of a system of an example embodiment. In Fig. 1, there are a plurality of cellular communication units, such as new radio user equipment, including transmitting user equipment, Tx UE, 110, receiving user equipment, Rx UE, 120, and another transmitter 110'. Each user equipment may communicate with a public land mobile network 130 and / or one or more other user equipment over respective sidelinks, SL, 110s, 110s'.

In the sidelink, SL, the quality of a PC5-RRC link (i.e., a unicast link) is monitored at a Medium Access Control, MAC, level via a discontinuous transmission, DTX, counter. Exceeding the DTX a counter threshold (sl-maxNumConsecutiveDTX) triggers indicating a radio link failure, RLF, to a radio resource control, RRC. One such procedure is specified in 3GPP TS 38.321 version 17.3.0 in Section 5.22.1.3.3 such that:
An HARQ-based sidelink radio link failure detection procedure is used to detect a sidelink radio link failure based on a number of consecutive DTX on an associated physical sidelink feedback channel, PSFCH, reception occasions for a PC5-RRC connection. The RRC configures the following parameter to control the HARQ-based SL RLF detection:
- sl-maxNumConsecutiveDTX.

The following user equipment variable is used for HARQ-based SL RLF detection.
- numConsecutiveDTX, which is maintained for each PC5-RRC connection.

The SL HARQ Request Entity shall (re-)initialize numConsecutiveDTX to zero for each PC5-RRC connection which has been established by upper layers, if any, upon establishment of the PC5-RRC connection or (re)configuration of sl-maxNumConsecutiveDTX.

The SL HARQ Entity shall for each PSFCH reception occasion associated to the PSFCH transmission:
1> if the PSFCH reception is absent on the PSFCH reception occasion:
   2> increment numConsecutiveDTX by 1;
   2> if numConsecutiveDTX reaches sl-maxNumConsecutiveDTX:
      3> indicate HARQ Request-based SL RLF detection to the RRC.
1> else:
   2> re-initialize numConsecutiveDTX to zero.

It is observed that if the same procedure is applied when the SL UEs operate in an unlicensed spectrum, where the channel access is controlled via an LBT procedure, then this procedure may erroneously increase the numConsecutiveDTX counter and, in turn, lead to an erroneously declaration of RLF to the RRC whenever the rate of LBT failures increases. This behaviour goes beyond the scope of DTX and RLF detection procedures of monitoring the link quality, as inter-system congestion and the associated LBT failure rate are addressed by another MAC procedure denoted as consistent LBT failure detection procedure.

To understand the impact of the LBT failure in the DTX and RLF detection procedure, let us consider three use cases that lead to the DTX counter increment based on the current procedure: (a) a PSFCH reception failure at the Tx UE due to an abrupt decrease in link quality (e.g., in a deep fade); (b) Physical Sidelink Control Channel, PSCCH/Physical Sidelink Shared Channel, PSSCH, reception failure at the Rx UE due to an abrupt decrease in link quality (e.g., in a deep fade); and (c) LBT failure at the Rx UE prior to attempting PSFCH transmission. The use cases (a) and (b) are the intended scope of the DTX and RLF detection procedure, while the use case (c) is outside the scope and should be instead dealt with it via the consistent LBT failure detection procedure.

In an example embodiment, the DTX/RLF detection procedure is updated for improved robustness against the LBT failures and to take into account multiple PSFCH occasions associated with the same PSCCH/PSSCH, e.g., in method comprising any one or more of:
1) In an example embodiment, the Tx UE determines whether the PSFCH associated to the PSSCH is within a shared COT and/or the LBT type to be applied to the PSFCH transmission at the Rx UE side.
2) In an example embodiment, if the determination is that PSFCH is within shared COT and/or the Rx UE should apply an LBT Type 2 channel access for transmitting in the PSFCH, the Tx UE determines the DTX in case of no-reply of ACK/NACK in the PSFCH, thus incrementing the consecutive DTX counter by default:
   a) In case the PSFCH is within a shared COT occasion, the probability is higher that the Rx UE should be able to access the shared COT. Thus, if no reply has been made, it is highly probable that this is due to problems in the transmission. Therefore, the DTX counter should be incremented, and a NACK should be assumed by default. Alternatively, it can be (pre)configured whether an ACK or a NACK should be assumed.
   b) The Tx UE may consider whether an LBT Type 2 channel access is of type 2A, 2B, or 2C when determining on whether to increment the DTX counter in case of no-reply. E.g., only in case of Type 2C, the Tx UE may determine Discontinuous Transmission in case of no-reply of ACK/NACK in the PSFCH as a NACK and to decide to increment the DTX counter.
3) If the determination is that the PSFCH is not within the shared COT and/or that the Rx UE may not apply an LBT Type 2 channel access (or at least not a Type 2C) for transmitting in the PSFCH,
   a) In an example embodiment, the Tx UE re-initialises the DTX counter and assumes the ACK by default;
      - Note: In case the PSFCH is not within a shared COT, the probability may be higher that the reason for no reply is due to the need for obtaining a new COT using a long LBT such as Type 1 LBT.
      - Alternatively to re-initialising the DTX counter, the DTX counter may be decremented or maintained unchanged.
   b) In an example embodiment, the Tx UE considers another criterion or other criteria for determining whether to assume the NACK or ACK due to the missing of the ACK/NACK in the PSFCH from the Rx UE. In an example embodiment, this behaviour is (pre)configured.
      - In an example embodiment, the Tx UE uses a signal quality of the link (e.g., based on a previous transmission from the Rx UE) to determine the appropriate feedback message;
         - In an example embodiment, in case a reference signal received power, RSRP, is above a given threshold, the Tx UE determines DTX in case of no-reply of ACK/NACK in the PSFCH as ACK, thus re-initialising (or decrementing or not changing) the DTX counter, as in case of good RSRP and need for Type 1 LBT, the probability of no-reply being due to LBT and not NACK is higher.

         - In an example embodiment, in case the RSRP is below a given threshold, the Tx UE determines DTX in case of no-reply of the ACK/NACK in the PSFCH as the NACK, thus incrementing the DTX counter, as in case of a bad RSRP, and need for Type 1 LBT, the probability of the no-reply being due to LBT and NACK is higher.
      - In an example embodiment, the Tx UE considers a preconfigured mapping of PC5 Quality of Service, QoS, identifier to be an AKC or NACK interpretation, for example, as the NACK for delay critical Guarantee Bitrate, and as the ACK for non-Guarantee Bitrate.
      - In an example embodiment, the Tx UE measures an inter-system channel state, such as a busy ratio, CBR, (i.e., a channel busy ratio measurement that considers the activity of both Sidelink and the other systems such as wireless local area network, WLAN). The Tx UE may measure an intra-system state, such as an intra-system channel busy ratio (i.e., a channel busy ratio measurement that consider only the sidelink activity). The Tx UE may determine a level of activity from other non-SL -systems based on a difference between the inter-system and intra-system states, and correspondingly determine its action.
         - In an example embodiment, in case of other system low activity, the Tx UE determines to increment the DTX counter upon the detection of PSFCH DTX;
         - In an example embodiment, while in case of other system high activity, then the Tx UE determines not to increment the DTX counter upon the detection of the PSFCH DTX.

Fig. 2 illustrates an example case with the PSFCH outside the COT. In Fig. 2, there is a physical sidelink control channel, PSCCH/physical sidelink shared channel, PSSCH denoted by reference sign 210, the COT 220, and now the PSFCH 230 outside the COT. There are also possible occasions for the PSFCH within the COT 220, though not used here for that purpose by the Tx UE 110.

Fig. 3 illustrates an example case in which the PSFCH is within the shared COT. Fig. 3 is similar to Fig. 2 instead here the PSFCH 230' resides within the COT 220 in one of the slots available for this purpose.

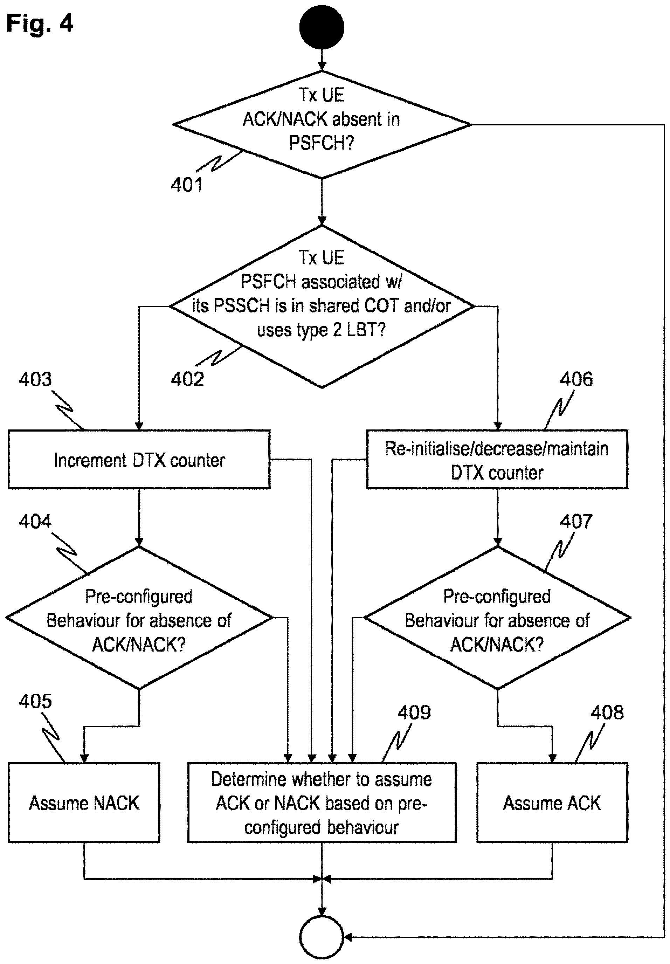

Fig. 4 shows a flowchart illustrating a method of an example embodiment:
401) A Tx UE determines if there is absence of HARQ ACK/NACK feedback in the PSFCH occasion. If yes, the method proceeds to block 2. Otherwise, the method ends.
402) The Tx UE determines whether the PSFCH associated to the PSSCH is located within a shared COT and/or is using an LBT Type 2 channel access. If yes, the Tx UE method proceeds to block 3, and otherwise the method proceeds to block 6.
403) The Tx UE increments the DTX counter, and the method proceeds to block 4. In an example embodiment, the incrementing of the DTX counter is subject to an incrementing condition. In an example embodiment, the incrementing condition is based on radio resource control configuration between the transmitting and receiving user equipment of the sidelink, provided by a gNB, based on a predefined specified rule, or configured by higher layers. In an example embodiment, the incrementing condition comprises that the sidelink physical feedback channel is associated with a listen before talk type 2C channel access.
404) The Tx UE checks whether there is a pre-configured UE behaviour for the missing HARQ ACK/NACK feedback. If yes, the method proceeds to block 9, and otherwise the method proceeds to block 5.
405) If there is no pre-configured behaviour, the Tx UE assumes NACK and the method ends.
406) The Tx UE reinitialises the DTX counter, or alternatively decrements the DTX counter or maintains the DTX counter unchanged. The method proceeds to block 7.
407) The Tx UE checks whether there is a pre-configured UE behaviour for the missing of the HARQ ACK/NACK. If yes, the method proceeds to block 9, and otherwise proceeds to block 8.
408) If there is no pre-configured behaviour, the Tx UE assumes ACK and the method ends.
409) The Tx UE determines whether to assume ACK or NACK based on the pre-configured behaviour and the method ends. In an example embodiment, the preconfigured behaviour is based on any one or more of quality of service, a PC5 quality of service indicator, or channel access priority class. In an example embodiment, the preconfigured behaviour is or comprises that if the PC5 quality of service indicator, channel access priority class meets a given threshold then the feedback message is indicative of a positive acknowledgement, otherwise of a negative acknowledgement. Other criteria may be applied, such as any one or more of the following: a signal level, signal-to-interference-plus-noise ratio, reference signal received power, channel busy ratio.

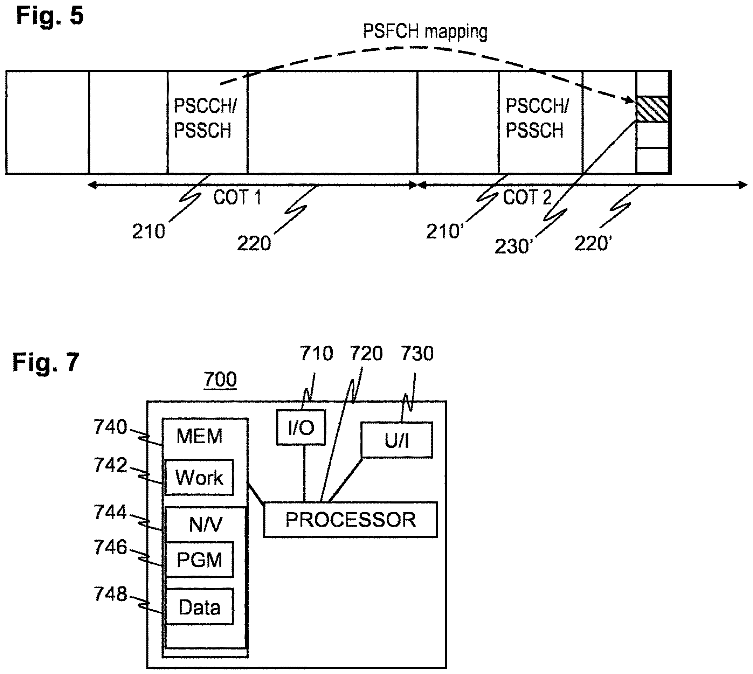

In an example embodiment, the method is at least partially repeated for each PSFCH occasion. In an example embodiment, the Tx UE also monitors the COT sharing from other transmissions to determine if there is available COT for the PSFCH. Fig. 5 illustrates an example where the physical sidelink feedback channel is within a second shared channel occupancy time which can be used by the Rx UE to transmit PSFCH based on LBT Type 2 channel access. Fig. 5 shows both the PSCCH/PSSCH 210, and COT 220 used by the Tx UE to for its sidelink to the Rx UE, and another PSCCH/PSSCH 210', another COT 220', and another PSFCH 230' that may be used by the Rx UE.

If the Rx UE initiates the COT, the Tx UE should apply behaviour from block 2 (similar behaviour as if the Rx UE transmits in the PSFCH within a shared COT from Tx UE).

If another transmitter shares the COT with the Rx UE, and the Rx UE may transmit in the PSFCH in this shared COT, the Tx UE should apply the behaviour from block 2 as well.

If another UE acquires a COT, but the Rx UE cannot use the shared COT overlapping with the PSFCH occasion of the Rx UE, then the Tx UE will apply the behaviour from block 3.

In an example embodiment, it is preconfigured/predefined for the Tx UE whether to increment or not the DTX counter upon determination of the no-reply in the PSFCH within the shared COT and/or using an LBT Type 2 channel access, as well as it can be preconfigured/predefined whether to re-initialise or decrement or maintain unchanged the DTX counter upon determination of the PSFCH outside the COT or using a long LBT type.

In an example embodiment, the Tx UE may determine that the PSFCH uses an LBT Type 2 channel access by knowing that Rx UE can use a shared COT or by knowing that PSFCH can use short control signalling procedure for transmitting in the PSFCH potentially applying an LBT Type 2A channel access.

In an example embodiment, the Tx UE also takes into account whether the Rx UE is having a consistent listen before talk failure on the listen before talk band where the PSFCH should be provided (e.g., based on an indication of the consistent LBT failure provided by the Rx UE for certain resource block sets). In case of the consistent LBT failure on the corresponding LBT band of PSFCH, the Tx UE may also not increment the DTX counter, and the UE may rely on the consistent LBT failure procedure for triggering or not the radio link failure.

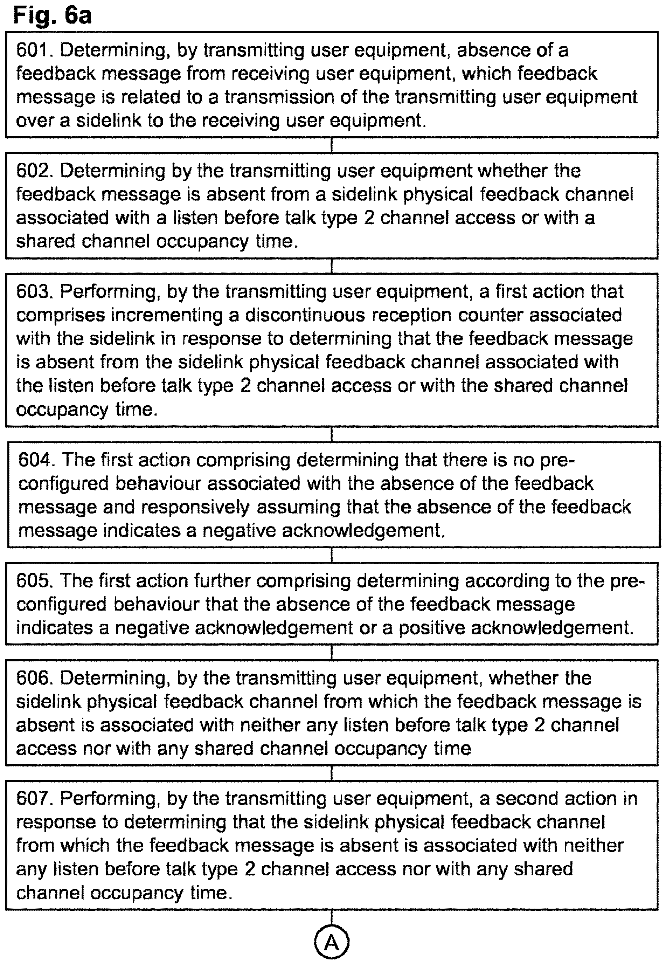

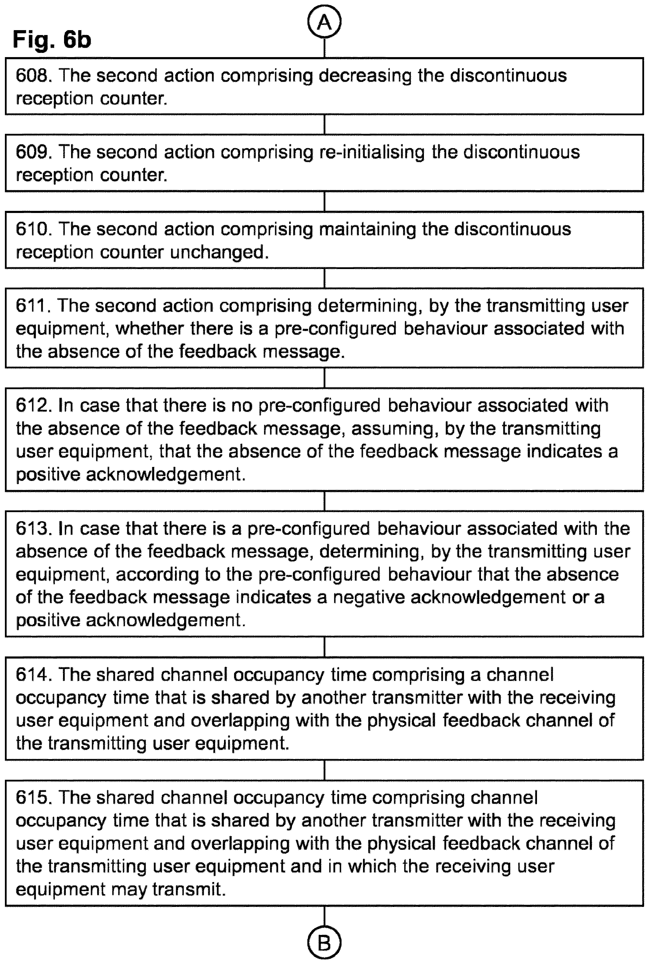

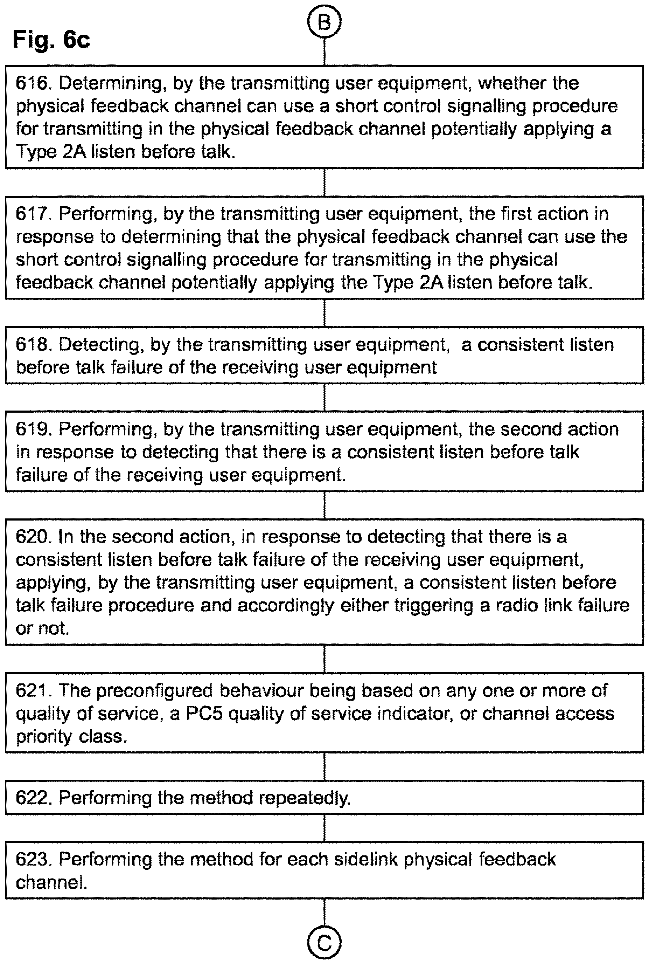

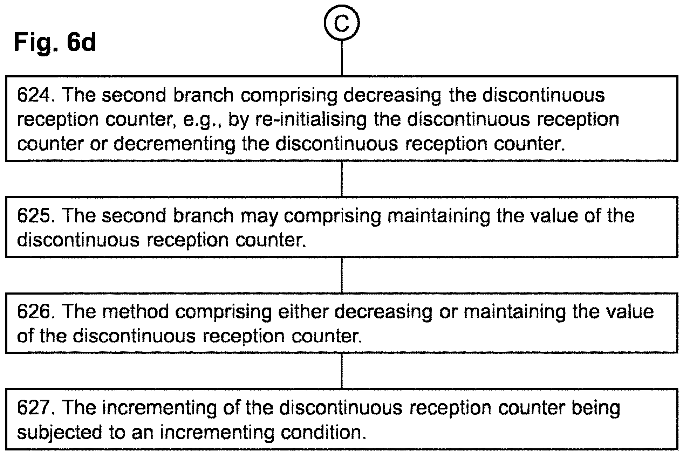

Figs. 6a to 6d show a schematic flow chart of a method of an example embodiment, comprising a number of features. The order and number of features to be used can be freely adapted by the skilled person as a matter of implementation. These drawings show blocks:

| | |
|---|---|
| 601. | Determining, by transmitting user equipment, absence of a feedback message from receiving user equipment, which feedback message is related to a transmission of the transmitting user equipment over a sidelink to the receiving user equipment. |
| 602. | Determining, by the transmitting user equipment, whether the feedback message is absent from a sidelink physical feedback channel associated with a listen before talk type 2 channel access or with a shared channel occupancy time. |
| 603. | Performing, by the transmitting user equipment, a first action that comprises incrementing a discontinuous reception counter associated with the sidelink in response to determining that the feedback message is absent from the sidelink physical feedback channel associated with the listen before talk type 2 channel access or with the shared channel occupancy time. |
| 604. | The first action comprising determining that there is no pre-configured behaviour associated with the absence of the feedback message and responsively assuming that the absence of the feedback message indicates a negative acknowledgement. |
| 605. | The first action further comprising determining according to the pre-configured behaviour that the absence of the feedback message indicates a negative acknowledgement or a positive acknowledgement. |
| 606. | Determining, by the transmitting user equipment, whether the sidelink physical feedback channel from which the feedback message is absent is associated with neither any listen before talk type 2 channel access nor with any shared channel occupancy time. |
| 607. | Performing, by the transmitting user equipment, a second action in response to determining that the sidelink physical feedback channel from which the feedback message is absent is associated with neither any listen before talk type 2 channel access nor with any shared channel occupancy time. |
| 608. | The second action comprising decreasing the discontinuous reception counter. |
| 609. | The second action comprising re-initialising the discontinuous reception counter. |
| 610. | The second action comprising maintaining the discontinuous reception counter unchanged. |
| 611. | The second action comprising determining, by the transmitting user equipment, whether there is a pre-configured behaviour associated with the absence of the feedback message. |
| 612. | In case that there is no pre-configured behaviour associated with the absence of the feedback message, assuming that the absence of the feedback message indicates a positive acknowledgement. |
| 613. | In case that there is a pre-configured behaviour associated with the absence of the feedback message, determining according to the pre-configured behaviour that the absence of the feedback message indicates a negative acknowledgement or a positive acknowledgement. |
| 614. | The shared channel occupancy time comprising a channel occupancy time that is shared by another transmitter with the receiving user equipment and overlapping with the physical feedback channel of the transmitting user equipment. |
| 615. | The shared channel occupancy time comprising channel occupancy time that is shared by another transmitter with the receiving user equipment and overlapping with the physical feedback channel of the transmitting user equipment and in which the receiving user equipment may transmit. |
| 616. | Determining, by the transmitting user equipment, whether the physical feedback channel can use a short control signalling procedure for transmitting in the physical feedback channel potentially applying a Type 2A listen before talk. |
| 617. | Performing, by the transmitting user equipment, the first action in response to determining that the physical feedback channel can use the short control signalling procedure for transmitting in the physical feedback channel potentially applying the Type 2A listen before talk. |
| 618. | Detecting, by the transmitting user equipment, a consistent listen before talk failure of the receiving user equipment. |
| 619. | Performing, by the transmitting user equipment, the second action in response to detecting that there is a consistent listen before talk failure of the receiving user equipment. |
| 620. | In the second action, in response to detecting that there is a consistent listen before talk failure of the receiving user equipment, applying, by the transmitting user equipment, a consistent listen before talk failure procedure and accordingly either triggering a radio link failure or not. |
| 621. | The preconfigured behaviour being based on any one or more of quality of service, a PC5 quality of service indicator, or channel access priority class. |
| 622. | Performing the method repeatedly. |
| 623. | Performing the method for each sidelink physical feedback channel. |
| 624. | The second action comprising decreasing the discontinuous reception counter, e.g., by re-initialising the discontinuous reception counter or decrementing the discontinuous reception counter. |
| 625. | The second action may comprise maintaining the value of the discontinuous reception counter. |
| 626. | The method comprising either decreasing or maintaining the value of the discontinuous reception counter. |
| 627. | The incrementing of the discontinuous reception counter being subjected to an incrementing condition. |

Fig. 7 shows a block diagram of an apparatus 700 according to an embodiment of the invention, e.g., suited for operating as user equipment.

The apparatus 700 comprises a memory 740 including a work memory 742 and a non-volatile memory 744 that contains computer program code 746 and data, such as pre-configured rules or configuration information. The apparatus 700 further comprises a processor 720 for controlling the operation of the apparatus 700 using the computer program code 746, a communication unit 710, such as a new radio capable of 5G cellular communications, for communicating with user equipment and cellular network. The communication unit 710 comprises, for example, a local area network (LAN) port; a wireless local area network (WLAN) unit; Bluetooth unit; cellular data communication unit; or satellite data communication unit. The processor 720 comprises, for example, any one or more of: a master control unit (MCU); a microprocessor; a digital signal processor (DSP); an application specific integrated circuit (ASIC); a field programmable gate array; and a microcontroller. The apparatus 700 further comprises a user interface 730, comprising, e.g., any one or more of a display, touch screen, button, microphone, speaker, fingerprint reader.

As used in this application, the term "circuitry" may refer to one or more or all of the following:
(a) hardware-only circuit implementations (such as implementations in only analogue and/or digital circuitry) and;
(b) combinations of hardware circuits and software, such as (as applicable):
   (i) a combination of analogue and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and / or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Without in any way limiting the scope, interpretation, or application of the claims appearing below, a technical effect of one or more of the example embodiments disclosed herein is that errors in feedback messages may be handled with fewer unnecessary occasions of unnecessarily rejected sidelinks. Another technical effect of one or more of the example embodiments disclosed herein is that radio resource utilisation may be enhanced. Yet another technical effect of one or more of the example embodiments disclosed herein is that data transmitted over a sidelink need not be unnecessarily retransmitted and actual lack of data may still be subsequently requested through flow control of a network or transport layer, for example.

Embodiments may be implemented in software, hardware, application logic or a combination of software, hardware, and application logic. The software, application logic and/or hardware may reside on a processor of the UE, a chipset controlling the UE, or a communications circuitry of the UE. If desired, part of the software, application logic and/or hardware may reside on another part of the UE. In an example embodiment, the application logic, software, or an instruction set is maintained on any one of various conventional computer-readable media. In the context of this document, a "computer-readable medium" may be any non-transitory media or means that can contain, store, communicate, propagate, or transport the instructions for use by or in connection with an instruction execution system, apparatus, or device, such as a computer, with one example of a computer described and depicted in Fig. 7. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope as defined in the appended claims.

## Claims

1. A method, comprising:
determining, by transmitting user equipment, absence of a feedback message from receiving user equipment, which feedback message is related to a transmission of the transmitting user equipment over a sidelink to the receiving user equipment;
determining, by the transmitting user equipment, whether the feedback message is absent from a sidelink physical feedback channel associated with a listen before talk type 2 channel access or with a shared channel occupancy time; and
performing, by the transmitting user equipment, a first action that comprises incrementing a discontinuous reception counter associated with the sidelink in response to determining that the feedback message is absent from the sidelink physical feedback channel associated with the listen before talk type 2 channel access or with the shared channel occupancy time.

2. The method of claim 1, wherein the first action further comprises determining that there is no pre-configured behaviour associated with the absence of the feedback message and responsively assuming that the absence of the feedback message indicates a negative acknowledgement.

3. The method of claim 2, wherein the first action further comprises determining according to the pre-configured behaviour that the absence of the feedback message indicates a negative acknowledgement or a positive acknowledgement.

4. The method of any one of preceding claims further comprising
determining, by the transmitting user equipment, whether the sidelink physical feedback channel from which the feedback message is absent is associated with neither any listen before talk type 2 channel access nor with any shared channel occupancy time; and
performing, by the transmitting user equipment, a second action in response to determining that the sidelink physical feedback channel from which the feedback message is absent is associated with neither any listen before talk type 2 channel access nor with any shared channel occupancy time.

5. The method of claim 4, wherein the second action comprises decreasing the discontinuous reception counter.

6. The method of claim 4, wherein the second action comprises re-initialising the discontinuous reception counter.

7. The method of claim 4, wherein the second action comprises maintaining the discontinuous reception counter unchanged.

8. The method of any one of claims 4 to 7, wherein
the second action comprises determining, by the transmitting user equipment, whether there is a pre-configured behaviour associated with the absence of the feedback message, and
in case that there is no pre-configured behaviour associated with the absence of the feedback message, assuming, by the transmitting user equipment, that the absence of the feedback message indicates a positive acknowledgement; and
in case that there is a pre-configured behaviour associated with the absence of the feedback message, determining, by the transmitting user equipment, according to the pre-configured behaviour that the absence of the feedback message indicates a negative acknowledgement or a positive acknowledgement.

9. The method of any one of preceding claims, wherein the shared channel occupancy time comprises a channel occupancy time that is shared by another transmitter with the receiving user equipment and overlapping with the physical feedback channel for carrying feedback message related to the transmission of the transmitting user equipment.

10. The method of any one of preceding claims, further comprising:
determining, by the transmitting user equipment, whether the receiving user equipment can use a shared channel occupancy time; and
performing, by the transmitting user equipment, the first action in response to determining that the receiving user equipment can use the shared channel occupancy time.

11. The method of any one of preceding claims, further comprising:
determining, by the transmitting user equipment, whether the physical feedback channel can use a short control signalling procedure for transmitting in the physical feedback channel potentially applying a Type 2A listen before talk; and
performing, by the transmitting user equipment, the first action in response to determining that the physical feedback channel can use the short control signalling procedure for transmitting in the physical feedback channel potentially applying the Type 2A listen before talk.

12. The method of any one of preceding claims, further comprising:
detecting, by the transmitting user equipment, whether there is a consistent listen before talk failure of the receiving user equipment; and
performing, by the transmitting user equipment, the second action in response to detecting that there is a consistent listen before talk failure of the receiving user equipment.

13. The method of claim 12, further comprising in the second action, in response to detecting that there is a consistent listen before talk failure of the receiving user equipment, applying, by the transmitting user equipment, a consistent listen before talk failure procedure and accordingly either triggering a radio link failure or not.

14. A computer program comprising computer executable program instructions configured to cause performing the method of any one of preceding claims.

15. An apparatus comprising means for performing the method of any one of claims 1 to 13.
